# EUROPEAN PATENT APPLICATION

(11) **EP 4 761 211 A1**
(43) Date of publication of application: **17.06.2026**
(21) Application number: 24220182.0
(22) Date of filing: 16.12.2024
(51) Int. Cl.: H04L 45/24, H04L 45/302, H04L 47/2416, H04L 47/2441, H04L 47/56, H04L 47/62, H04L 47/10

(54) **L4S AWARE MULTIPATH SYSTEM**

(71) Applicant: Deutsche Telekom AG, 53113 Bonn (DE)
(72) Inventor: AMEND, Markus, 63667 Nidda (DE)
(74) Representative: karo IP

(57) **Abstract**

Techniques for managing data traffic in a multipath communication system, comprising:
• receiving traffic, by a classifying entity, having Low Latency, Low Loss, and Scalable Throughput, L4S, properties by:
∘ monitoring Explicit Congestion Notification, ECN, signaling in the traffic stream, and/or
∘ analyzing traffic patterns, service types, and/or quality of service, QoS, requirements;

• classifying the detected L4S traffic and non-L4S traffic into separate queues by means of the classifying entity, in particular into a L4S-queue and a non-L4S-queue;
• applying a traffic scheduling logic, by a priority scheduler entity, that prioritizes L4S traffic over non-L4S traffic according to a criteria, wherein the criteria determines which data amount of L4S traffic and/or non-L4S traffic is being passed through the priority scheduler entity;
• wherein the classifying entity, and the priority scheduler entity are each associated with a multipath scheduler of a sender entity, in particular associated with a scheduler buffer of the sender entity.

## Description

The present invention relates to the field of communication networks, particularly to multipath systems capable of managing data traffic with Low Latency, Low Loss, and Scalable Throughput, L4S, properties. The invention addresses methods and systems for integrating L4S traffic handling within multipath frameworks to improve Quality of Service (QoS) and Quality of Experience (QoE).

Low Latency, Low Loss, and Scalable Throughput, L4S, is a concept that reduces queuing delay at its root cause: the congestion controllers of senders rather than the queues themselves. The L4S architecture enables Internet applications to transition away from traditional congestion control algorithms that result in significant queuing delays and adopt newer algorithms that achieve capacity-seeking behavior with minimal queuing. This is supported by the use of Explicit Congestion Notification (ECN) signaling in the network (see RFC 9330).

L4S finds applications in modern systems, including 3GPP specifications for XR and media services in Release 18 (https://www.3gpp.org/technologies/xr-sa2), and is implemented smart phones for testing and debugging applications (see https://developer.apple.com/documentation/network/testing_and_debugging_l 4s_in_your_app; RFC 9331, 3GPP TS 23.503 V19.1.0). Ideally, L4S is supported throughout the entire end-to-end (E2E) transport path to ensure reliable performance, improved QoE, and enhanced QoS compared to non-L4S transport.

Separately, multipath transport systems, such as MP-QUIC, MPTCP, and CMT-SCTP, allow simultaneous usage of multiple network paths for higher bandwidth aggregation, low-latency transmission, or combinations thereof. Frameworks like 3GPP ATSSS and Hybrid Access leverage multipath techniques to improve network transport quality.

However, existing multipath systems do not account for the integration of L4S properties, particularly when such systems employ their own scheduling or reordering buffers. Furthermore, conflicts may arise between L4S and non-L4S traffic when they share the same multipath buffers. These limitations highlight the need for a multipath system capable of recognizing and optimizing traffic with L4S properties.

Hence, it is the object of the present invention to provide techniques that enable a multipath communication recognize and handle data traffic with L4S properties.

This object is solved by the features of the independent claims.

The features of the various aspects of the invention described below or the various examples of implementation may be combined with each other, unless this is explicitly excluded or is technically impossible.

Furthermore, the terms first, second, third and the like in the description and in the claims are used for distinguishing between similar elements and not necessarily for describing a sequential or chronological order. It is to be understood that the terms so used are inter- changeable under appropriate circumstances and that the embodiments of the invention described herein are capable of operation in other sequences than described or illustrated herein.

According to a first aspect of the invention, a method for managing data traffic in a multipath communication system is disclosed, comprising:
- (a) detecting or receiving traffic, by a classifying entity, having Low Latency, Low Loss, and Scalable Throughput (L4S) features or properties by:
   o monitoring Explicit Congestion Notification (ECN) signaling in the traffic stream, and/or
   o analyzing traffic patterns, service types, and/or quality of service (QoS) requirements;
   o this traffic can also be called L4S-traffic;
   ∘ the traffic can also be received by a separate receiving entity;
- (b) classifying the detected L4S traffic and non-L4S traffic into separate queues by means of the classifying entity;
- (c) applying a traffic scheduling logic, by a L4S priority scheduler entity, that prioritizes L4S traffic over non-L4S traffic according to a criteria, wherein the criteria determines which data amount of L4S traffic and/or non-L4S traffic is being passed through the L4S priority scheduler entity;
- wherein the classifying entity, and the L4S priority scheduler entity are each associated with a multipath scheduler of a sender entity, in particular associated with a multipath scheduler buffer of the sender entity.

In particular, the method can be performed in the order (a) to (c).

This method provides an efficient mechanism to manage traffic in a multipath communication system by leveraging L4S-specific features. The classifying entity identifies L4S traffic using ECN signaling or specific patterns such as service types and QoS requirements, which allows for precise identification of latency-sensitive traffic. The classified traffic is assigned to separate queues, ensuring that L4S traffic is isolated from other traffic types. The L4S priority scheduler then applies scheduling logic to prioritize L4S traffic according to criteria such as bandwidth allocation or latency thresholds. By associating these entities with the multipath scheduler, the system optimizes end-to-end traffic flow while maintaining high throughput. This approach is particularly advantageous for applications like real-time gaming or video streaming, where maintaining low latency is critical. It also ensures fairness for non-L4S traffic by providing separate handling.

The criteria in the context of the traffic scheduling logic define the rules or parameters used by the priority scheduler entity to determine the amount of L4S traffic and/or non-L4S traffic that is passed through. These criteria are designed to ensure optimal resource allocation, maintain fairness between different traffic types, and fulfill Quality of Service (QoS) requirements. One example of such criteria is proportional allocation based on traffic type, where the L4S priority scheduler assigns bandwidth to L4S and non-L4S traffic in predefined ratios or based on dynamic demand. For instance, if the total available bandwidth is 100 Mbps and the system prioritizes L4S traffic by a ratio of 70:30, then 70 Mbps is allocated to L4S traffic and 30 Mbps to non-L4S traffic. If L4S traffic only requires 50 Mbps, the remaining 50 Mbps can be allocated to non-L4S traffic. Another approach involves latency sensitivity thresholds, where L4S traffic is prioritized based on latency constraints, such as queuing delay or time-to-deliver (TTD) requirements. Non-L4S traffic is scheduled only when the thresholds for L4S traffic are met. For example, the scheduler may prioritize L4S traffic until its queuing delay remains under 5 milliseconds, ensuring minimal latency for sensitive traffic. The criteria can also adapt dynamically to real-time network conditions, such as congestion, packet loss, or Explicit Congestion Notification (ECN) feedback. In this case, the scheduler prioritizes L4S traffic to prevent latency spikes and temporarily reduces non-L4S traffic throughput. When congestion subsides, bandwidth allocation is adjusted to restore throughput for non-L4S traffic. In multipath systems, the criteria might involve path-specific prioritization, where L4S traffic is routed through the lowest latency path, and non-L4S traffic is routed through other available paths. For instance, if a multipath system has two paths with latencies of 10 ms and 50 ms, respectively, the scheduler routes L4S traffic through the 10 ms path to ensure the best performance, while non-L4S traffic is sent through the higher latency path. Also, weighted fair queuing (WFQ) can be used as a criterion, where the scheduler dynamically assigns weights to L4S and non-L4S queues. This ensures a fair allocation while still prioritizing L4S traffic. For example, with weights of 0.8 for L4S traffic and 0.2 for non-L4S traffic, the L4S priority scheduler allocates 80% of the total bandwidth to L4S traffic and 20% to non-L4S traffic. To illustrate, consider a scenario with 220 Mbps of available bandwidth, where the criteria involve dynamic adjustment based on network conditions. If L4S traffic requires 120 Mbps and non-L4S traffic requires 100 Mbps in a low-congestion state, both traffic types receive their required bandwidth. However, during congestion if the available bandwidth reduces to 150 Mbps, the L4S priority scheduler adjusts allocation to prioritize L4S traffic with 100 Mbps, while assigning the remaining 50 Mbps to non-L4S traffic. These criteria enable the priority scheduler to optimize the performance of L4S traffic while maintaining fair treatment of non-L4S traffic, even under varying network conditions.

According to a second aspect of the invention, a sender entity for managing data traffic in a multipath communication system is disclosed, comprising:
- a classifying entity configured to detect traffic having Low Latency, Low Loss, and Scalable Throughput (L4S) properties by:
   ∘ monitoring Explicit Congestion Notification (ECN) signaling in the traffic stream, and/or
   ∘ analyzing traffic patterns, service types, and/or quality of service (QoS) requirements;
- the classifying entity configured to classify the detected L4S traffic and non-L4S traffic into separate queues;
- a L4S priority scheduler entity configured to apply a traffic scheduling logic that prioritizes L4S traffic over non-L4S traffic according to a criteria, wherein the criteria determines which data amount of L4S traffic and/or non-L4S traffic is being passed through the priority scheduler entity;
- wherein the classifying entity, and the L4S priority scheduler entity are each associated with a multipath scheduler of the sender entity, in particular associated with a scheduler buffer of the sender entity.

This sender entity provides the same advantages like described within the context of the invention.

According to a third aspect of the invention, a multipath communication system is disclosed that is configured to execute the steps of the method according to the first aspect of the invention.

In an embodiment,
- a first classifying entity, and a first L4S priority scheduler entity are associated with a first data path and located in the direction of data traffic transmission behind the multipath scheduler; and
- a second classifying entity, and a second L4S priority scheduler entity are associated with a second data path and located in the direction of data traffic transmission behind the multipath scheduler,
- wherein the first data path and the second data path are part of a multipath communication system.

This method separates traffic management across individual paths of a multipath system by associating distinct detection, classification, and scheduling entities with each path. The placement of these entities downstream of the multipath scheduler ensures that traffic prioritization and handling occur on a per-path basis, independent of other paths. In the context of this invention, "downstream" or "subsequent" refers to the direction of data flow sent by an entity within the multipath system. It specifically indicates the position of an entity or process that is located further along the path of data transmission, relative to the sender. This modular approach enhances the system's ability to adapt to heterogeneous network environments where each path may exhibit different latency, bandwidth, or reliability characteristics. For example, a high-latency path can be reserved for non-critical traffic, while L4S traffic is directed through a low-latency path. This flexibility maximizes resource utilization and ensures optimal performance for latency-sensitive traffic without degrading the overall throughput.

In an embodiment, a single classifying entity, and a single L4S priority scheduler entity are associated with a single data path and located in the direction of data traffic transmission before the multipath scheduler.

In this configuration, traffic detection, classification, and scheduling occur upstream of the multipath scheduler, simplifying traffic management when a single data path is used to feed the multipath scheduler. This approach reduces processing overhead by performing all traffic prioritization and classification before traffic reaches the multipath scheduler. By isolating L4S traffic from non-L4S traffic at this early stage, the system ensures that only prioritized traffic flows through the scheduler, optimizing its operations. This method is particularly beneficial for scenarios involving limited resources, as it reduces contention at the multipath scheduler and enhances the responsiveness of L4S traffic handling.

In an embodiment, the single L4S priority scheduler is integrated into the multipath scheduler.

Integrating the priority scheduler into the multipath scheduler consolidates the traffic management architecture, minimizing latency caused by separate processing components. This integration streamlines the handling of L4S and non-L4S traffic, ensuring that prioritization occurs seamlessly within the multipath scheduler. By eliminating the need for standalone priority scheduling, this configuration reduces system complexity and processing delays, making it well-suited for high-performance environments where real-time traffic handling is essential.

In an embodiment, the method further comprising dynamically adjusting the scheduling logic based on detected network congestion to optimize throughput and latency for L4S traffic.

This introduces an adaptability to the scheduling process by enabling dynamic adjustments based on real-time network conditions. For example, if congestion is detected on one path, the system can dynamically shift L4S traffic to an alternate path or adjust the priority levels within the same path. This adaptability ensures consistent low-latency performance for L4S traffic, even under varying network conditions. The system benefits latency-sensitive applications such as interactive gaming, virtual reality, and live video streaming by maintaining a smooth and uninterrupted user experience.

According to a fourth aspect of the invention, a receiving entity for managing data traffic in a multipath communication system is disclosed, comprising:
- a classifying entity configured to detect traffic having Low Latency, Low Loss, and Scalable Throughput (L4S) properties by:
   ∘ monitoring Explicit Congestion Notification (ECN) signaling in the traffic stream, and/or
   ∘ analyzing traffic patterns, service types, and/or quality of service (QoS) requirements;
- the classifying entity configured to separate the detected L4S and non-L4S traffic received via at least two different data paths into a L4S-queue and a non-L4S-queue;
- a L4S priority scheduler entity configured to apply a traffic scheduling logic that prioritizes L4S traffic over non-L4S traffic according to a criteria, wherein the criteria determines which data amount of L4S traffic and/or non-L4S traffic is being passed to a receiving unit, in particular a re-ordering queue;
- wherein the classifying entity, and the L4S priority scheduler entity are located before the receiving unit, e.g. application of the receiver, in particular the re-ordering queue, in the direction of data transmission or that the classifying entity, and the L4S priority scheduler entity are located behind the a receiving unit in the direction of data transmission.
   ∘ in particular, the L4S priority scheduler can be integrated into the re-ordering queue;
   ∘ the receiving unit can be the application implemented within the receiver that processes the data to provide a service to a user;

This describes a receiving entity in a multipath communication system that efficiently manages L4S and non-L4S traffic. A detection entity or classifying entity identifies L4S traffic using Explicit Congestion Notification (ECN) signaling or by analyzing traffic patterns, service types, or QoS requirements. The classifying entity separates detected traffic into an L4S queue and a non-L4S queue, ensuring latency-sensitive L4S traffic is handled independently of non-L4S traffic. A L4S priority scheduler applies scheduling logic to prioritize L4S traffic based on criteria that determine how much L4S and non-L4S traffic is passed to the re-ordering queue. These components can be located either before or behind the re-ordering queue, allowing flexible configurations based on network needs. This setup improves latency for L4S traffic while maintaining efficient bandwidth utilization for non-L4S traffic. It is especially effective in multipath systems, ensuring end-to-end QoS and supporting applications like gaming, video conferencing, and augmented reality. This method thus enables optimized traffic management while enhancing overall network performance.

According to a fifths aspect of the invention, a method for managing data traffic in a multipath communication system is disclosed, comprising:
- (a) detecting traffic, by a classifying entity, having Low Latency, Low Loss, and Scalable Throughput (L4S) properties by:
   ▪ monitoring Explicit Congestion Notification (ECN) signaling in the traffic stream, and/or
   ▪ analyzing traffic patterns, service types, and/or quality of service (QoS) requirements;
- (b) separating the detected L4S and non-L4S traffic received via at least two different data paths into an L4S-queue and a non-L4S-queue by means of the classifying entity;
- (c) applying a traffic scheduling logic, by a L4S priority scheduler entity, that prioritizes L4S traffic over non-L4S traffic according to a criteria, wherein the criteria determines which data amount of L4S traffic and/or non-L4S traffic is being passed through the priority scheduler entity to a receiving unit, in particular the re-ordering queue;
- wherein the classifying entity, and the L4S priority scheduler entity are located before the receiving unit in the direction of data transmission.
   ∘ in particular, the L4S priority scheduler can be integrated into the re-ordering queue;

In particular, the method can be performed in the order (a) to (c).

This method according to the fifths aspect of the invention teaches a system where traffic is separated into distinct reordering buffers at the receiver side, enabling independent management of L4S and non-L4S traffic. By placing the detection, classification, and scheduling entities upstream of the receiving unit, in particular the reordering queue, the system ensures that traffic is preprocessed for efficient handling. This configuration minimizes reordering delays for L4S traffic and ensures compliance with its strict latency requirements, providing a significant advantage for applications that depend on timely data delivery.

According to a sixth aspect of the invention, multipath communication system is provided that is configured to execute the method according to the fifths aspect of the invention.

According to a seventh aspect of the invention a method for managing data traffic in a multipath communication system is disclosed, comprising:
- (a) detecting traffic, by a classifying entity, having Low Latency, Low Loss, and Scalable Throughput (L4S) properties by:
   ∘ monitoring Explicit Congestion Notification (ECN) signaling in the traffic stream, and/or
   ∘ analyzing traffic patterns, service types, and/or quality of service (QoS) requirements;
   ∘ the traffic can be of multipath traffic origin;
- (b) separating the detected L4S and non-L4S traffic received via at least two different data paths into an L4S-queue and a non-L4S-queue by means of the classifying entity;
- (c) applying a traffic scheduling logic, by a priority scheduler entity, that prioritizes L4S traffic over non-L4S traffic according to a criteria, wherein the criteria determines which data amount of L4S traffic and/or non-L4S traffic is being passed through the priority scheduler entity to an application of the receiving entity;
- wherein the classifying entity, and the priority scheduler entity are located behind the re-ordering queue in the direction of data transmission.

In particular, the method can be performed in the order (a) to (c).

According to an eight aspect of the invention, a multipath communication system is provided that is configured to execute the method according to the seventh aspect of the invention.

According to a ninth aspect of the invention, a receiving entity is provided that is configured to execute the method according to the seventh aspect of the invention.

The key advantage of placing the classifying entity, and priority scheduler entity behind the re-ordering queue in the direction of data transmission is that it ensures all packets have already been correctly sequenced before classification and prioritization occur. This placement simplifies the handling of out-of-order packets, which are common in multipath systems due to path-specific delays, and eliminates the need for upstream components to account for reordering complexities. By processing traffic after reordering, the system provides more accurate classification and prioritization, as the traffic stream is already aligned. This improves scheduling efficiency and ensures that L4S traffic receives the low-latency treatment it requires, while non-L4S traffic is managed without disruption. Additionally, this configuration allows seamless integration into existing multipath systems, making it flexible and easy to deploy in a variety of network environments.

According to a tenth aspect of the invention, a multipath system for managing data traffic is disclosed, comprising:
a path manager of a sender entity configured to receive a request for Low Latency, Low Loss, and Scalable Throughput (L4S) features for a first data path and/or a second data path, wherein the path manager establishes and maintains the first data path and the second data path between multipath endpoints;
realizing L4S traffic on one or more of the data paths of the multipath system by creating L4S marking on the respective data path by the path manager, in particular L4S features are applied by any L4S-capable entity along the path between a multipath scheduler and a receiver, in particular between an end-to-end (E2E) sender and an E2E receiver; the E2E sender can be the multipath sender comprising the path manger that applies the L4S features;
the path manager being further configured to control the usage of L4S on individual paths of the multipath system.

According to an eleventh aspect of the invention, a method for managing data traffic in a multipath communication system is disclosed, comprising:
(a) requesting a demand for Low Latency, Low Loss, and Scalable Throughput (L4S) features to a multipath path manager for a first data path and/or a second data path, wherein the path manager establishes and maintains the first data path and the second data path between multipath endpoints;
(b) realizing L4S on one or more of the data paths of the multipath system by creating L4S marking on the respective data path, in particular L4S features are applied by any L4S-capable entity along the path between a multipath scheduler and a receiver, in particular between an end-to-end (E2E) sender and an E2E receiver;
(c) configuring the path manager to control the usage of L4S on individual paths of the multipath system.

In particular, the method can be performed in the order (a) to (c).

This method enables the explicit activation and management of L4S features on specific paths within a multipath system. By injecting a demand for L4S into a path manager, the system ensures that L4S traffic is handled with appropriate markings and prioritizations. The path manager dynamically establishes and maintains data paths while controlling the usage of L4S on individual paths. This configuration is particularly useful for ensuring that only paths with sufficient quality (e.g., low latency, low packet loss) are utilized for L4S traffic. Additionally, the system allows L4S marking to propagate to downstream network entities, ensuring end-to-end support for L4S features. This benefits applications requiring consistent low-latency performance, such as video conferencing or interactive online services.

According to a twelfths aspect of the invention, a sender entity is provided that is configured to execute the method according to the eleventh aspect of the invention.

According to a thirteenths aspect of the invention, computer program product for managing data traffic in a multipath communication system is disclosed, comprising instructions which, when executed by a processor, cause the processor to:
apply a scheduling logic within a multipath scheduler that treats Low Latency, Low Loss, and Scalable Throughput (L4S)-marked traffic and non-L4S-marked traffic differently, wherein traffic with L4S demand is scheduled into a first data path with L4S marking, while other traffic is scheduled into a second data path without L4S features;
forward L4S-marked traffic to the first data path and non-L4S-marked traffic to the second data path based on the scheduling logic.

This details how a multipath scheduler applies specific scheduling logic to differentiate between L4S-marked and non-L4S-marked traffic. By directing L4S traffic to a low-latency path and other traffic to a path without L4S features, the method optimizes the usage of network resources. This separation ensures that L4S traffic benefits from reduced latency and loss, while non-L4S traffic is routed efficiently without negatively impacting L4S performance. The system can also aggregate preferred paths for simultaneous use to further enhance throughput for L4S traffic. The advantage of this configuration is that it maximizes network performance for critical L4S applications while maintaining fair and efficient handling of other traffic types.

According to a fourteenths aspect of the invention, a method for managing data traffic in a multipath communication system, comprising:
(a) applying a scheduling logic within a multipath scheduler that treats Low Latency, Low Loss, and Scalable Throughput (L4S)-marked traffic and non-L4S-marked traffic differently, wherein:
   traffic with L4S demand is scheduled into a first data path with L4S marking, while other traffic is scheduled into a second data path without L4S features;
(b) forwarding L4S-marked traffic to the first data path and non-L4S-marked traffic to the second data path based on the scheduling logic.

According to a fifteenths aspect of the invention, a multipath system for managing data traffic is disclosed, wherein the multipath system is configured to execute the steps

According to a sixteenths aspect of the invention, a sender entity is provided that is configured to execute the method according to the fourteenths aspect of the invention.

According to a seventeenths aspect of the invention, a re-ordering queue setup for managing data traffic in a multipath communication system is disclosed, comprising:
- a first re-ordering queue configured for L4S traffic;
- a second re-ordering queue configured for non-L4S traffic, wherein the first re-ordering queue and the second re-ordering queue are configured differently in terms of re-ordering objectives and/or the maximum time packets remain in the respective queues;
- a data traffic separator configured to separate L4S traffic into the first re-ordering queue and non-L4S traffic into the second re-ordering queue.

The re-ordering queue setup can be part of the receiving entity.

The corresponding method for managing data traffic in a multipath communication system is described as follows:
(a) providing a first re-ordering queue and a second re-ordering queue of a receiver;
(b) configuring the first re-ordering queue for L4S traffic and the second re-ordering queue for non-L4S traffic, in particular the queues are configured differently in terms of re-ordering objectives and/or the maximum time packets remain in the respective queues;
(c) applying a re-ordering logic by a data traffic separator that separates L4S-traffic into the L4S-re-ordering queue and non-L4S-traffic into the non-L4S-re-ordering queue.

In particular, the method can be performed in the order (a) to (c).

This provides a detailed mechanism for managing reordering at the receiver side by using separate reordering queues for L4S and non-L4S traffic. The queues are configured differently to cater to their specific requirements; for example, the L4S queue might prioritize latency minimization, while the non-L4S queue might prioritize throughput or reordering accuracy. A data traffic separator ensures that incoming traffic is correctly assigned to the appropriate queue, enabling efficient handling of both traffic types. This architecture ensures that L4S traffic adheres to its strict latency requirements, while non-L4S traffic benefits from optimized reordering. The advantage of this method is that it reduces delays for critical traffic without compromising the handling of less time-sensitive data, improving overall network performance and user experience.

In the following, preferred implementation examples of the present invention are explained with reference to the accompanying figure:
- Fig. 1:: shows a common multipath system;
- Fig. 2:: shows a multipath system embedded into E2E transport;
- Fig. 3:: shows a first Dual Queue Couple AQM associated to a multipath scheduler;
- Fig. 4:: shows a second Dual Queue Couple AQM associated to a multipath scheduler;
- Fig. 5:: shows a third Dual Queue Couple AQM associated to a multipath scheduler;
- Fig. 6:: shows a first Dual Queue Couple AQM integrated with multipath reordering;
- Fig. 7:: shows a second Dual Queue Couple AQM integrated with multipath reordering;
- Fig. 8:: shows a third Dual Queue Couple AQM integrated with multipath reordering;
- Fig. 9:: shows a fourth Dual Queue Couple AQM integrated with multipath reordering;
- Fig. 10:: shows L4S enabled communication between multipath peers;
- Fig. 11:: shows forwarding L4S information to an E2E receiver;
- Fig. 12:: shows a L4S aware multipath scheduler;
- Fig. 13:: shows a L4S aware re-ordering;
- Fig. 14:: illustrates L4S traffic detection;

In the following, numerous features of the present invention are explained in detail by means of preferred embodiments. The present disclosure is not limited to the specifically named combinations of features. Rather, the features mentioned here can be combined arbitrarily into inventive embodiments, unless this is expressly excluded below.

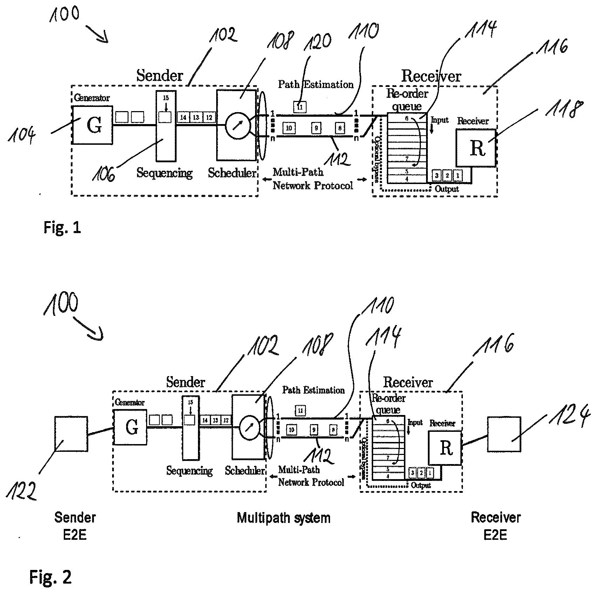

Fig. 1 illustrates a multipath communication system 100, showcasing the state of the art in which a sending entity 102 and a receiving entity 116 are connected via multiple data paths, including first data path 110 and second data path 112. The sending entity includes a data generator unit 104 that produces data packets 120 for transmission. These packets are sequenced by sequencing unit 106 to maintain proper order and continuity before being distributed by a multipath scheduler 108 across the available paths. At the receiving entity, packets arriving from different paths are processed through an optional re-ordering queue 114 to restore the original sequence, after which they are forwarded to receiving unit 118 for delivery to the application.

While this architecture effectively supports multipath transport, it exhibits critical limitations due to its lack of awareness of Low Latency, Low Loss, and Scalable Throughput (L4S) properties. A significant issue is that the multipath system relies on its own buffering mechanisms, such as the scheduler in the sender and the re-ordering queue in the receiver, which are not designed to handle L4S traffic. These buffers can introduce unnecessary queuing delays, particularly when L4S traffic is mixed with non-L4S traffic, negating the low-latency benefits that L4S is designed to provide.

Another problem arises when L4S traffic traverses multipath systems that are not explicitly aware of its requirements. For example, while L4S can be independently applied to individual paths in protocols such as MPTCP or MP-QUIC, the multipath system itself does not consider L4S-specific needs. This is especially problematic in scenarios where multipath systems are layered onto existing L4S-capable connections, such as MPTCP E2E, MPTCP with Proxy (as in Hybrid Access or ATSSS-HL in 3GPP Release 16), or multipath tunneling with ATSSS MP-QUIC (in 3GPP Release 18). In such cases, the multipath protocol encapsulates traffic without knowledge of whether it is L4S or non-L4S, leading to suboptimal handling and performance degradation for L4S traffic.

The lack of coordination between the L4S-specific requirements and the multipath system's operation also creates inefficiencies in resource allocation. For instance, the multipath scheduler may assign L4S traffic to paths without considering latency characteristics, undermining the low-latency objectives of L4S. Similarly, the re-ordering queue at the receiver does not differentiate between L4S and non-L4S traffic, potentially causing latency-sensitive L4S traffic to experience delays due to the presence of non-L4S traffic in the same queue.

Fig. 2 depicts the multipath communication system 100 as shown in Fig. 1 but embedded within a broader transport network, such as those used in Hybrid Access or ATSSS. In this configuration, an end-to-end (E2E) sender 122 and an E2E receiver 124 communicate via the multipath system. Unlike Fig. 1, the E2E sender 122 and E2E receiver 124 do not rely on their own multipath transmission; instead, the multipath system serves as an intermediary between them.

The E2E sender generates traffic that is passed through the sending entity 102, where the multipath scheduler 108 distributes data packets 120 across first data path 110 and second data path 112. These packets are received by the receiving entity 116, where they are reordered in re-ordering queue 114 before being forwarded to the E2E receiver 124. This setup enables multipath transport without requiring the E2E sender or receiver to manage multipath-specific operations themselves.

However, this scenario introduces additional challenges compared to Fig. 1 due to the lack of L4S awareness. One key issue is that the E2E sender and E2E receiver may not implement or require multipath protocols, which means E2E L4S signaling might not be applied consistently across all paths in the multipath system. For example, one path might use L4S while another path does not. This inconsistency can undermine the low-latency benefits of L4S when data streams are combined in the re-ordering queue at the receiver.

Another problem arises from potential conflicts between L4S and non-L4S traffic within the buffers of the multipath system. Since the multipath scheduler 108 and re-ordering queue 114 do not differentiate between L4S and non-L4S traffic, latency-sensitive L4S traffic can experience delays caused by non-L4S traffic in the same buffers. These conflicts negate the advantages of L4S and result in suboptimal performance for real-time applications that rely on low-latency transport.

Compared to Fig. 1, Fig. 2 highlights the additional complexity introduced by embedding a multipath system in a transport network where the endpoints do not explicitly manage multipath operations. The lack of coordination between L4S-specific requirements and the intermediary multipath system creates inefficiencies and can degrade overall QoS, particularly for applications that depend on L4S properties. This scenario demonstrates the need for multipath systems to become L4S-aware to fully leverage the benefits of L4S in more complex network configurations.

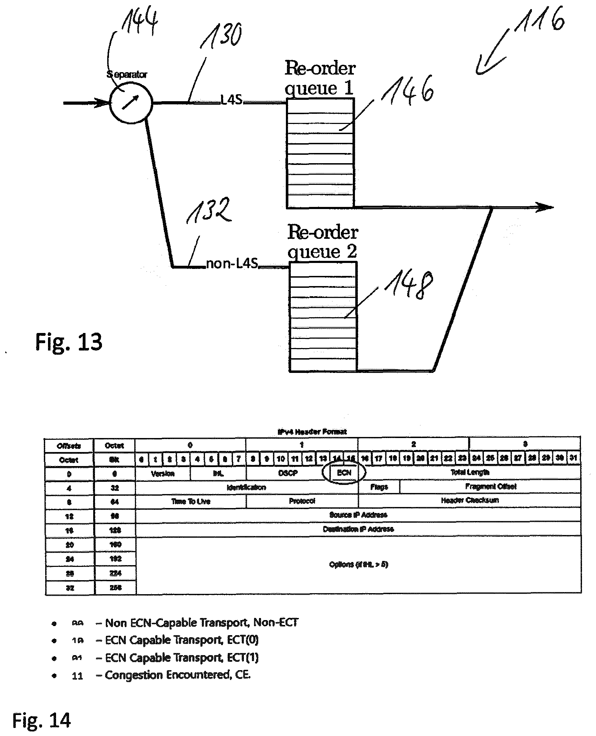

Fig. 14 illustrates the detection of L4S traffic in a multipath system, specifically focusing on the use of the Explicit Congestion Notification (ECN) field in the IPv4 header. The L4S-aware multipath system leverages ECN signaling as described in RFC 9331 to detect L4S traffic or its demand. The ECN field provides four possible values that indicate the transport state:
- 00: Non ECN-Capable Transport (Non-ECT).
- 01: ECN-Capable Transport (ECT(0)), typically used in traditional congestion control.
- 10: ECN-Capable Transport (ECT(1)), associated with L4S.
- 11: Congestion Encountered (CE), signaling congestion on the path.

By monitoring the ECN field, the multipath system can identify packets marked with ECT(1) and recognize them as L4S traffic. This forms the foundation for ensuring that L4S traffic is handled appropriately within the system.

Key Methods for L4S Traffic Detection of the Invention
1. Detection of ECN Signaling
   The multipath system inspects incoming traffic and identifies L4S packets based on their ECN field. For example, an IPv4 header with ECT(1) marking indicates the packet is L4S-enabled. This allows the system to differentiate L4S from non-L4S traffic without analyzing other traffic parameters.
2. Traffic Analysis for QoS Determination
   The system may analyze traffic using techniques such as Deep Packet Inspection (DPI) to identify L4S-specific QoS demands. For instance, real-time applications like gaming or video conferencing might exhibit specific patterns or payload behaviors that signify the need for L4S. DPI enables recognition of such demands based on protocol information, payload structure, or traffic flow patterns. As described in "3GPP TS 23.503 V19.1.0 (2024-09), Table 6.6.2.1-2: UE Route Selection Policy Rule" or in "https://www.gsma.com/newsroom/wp-content/uploads/NG.141-v1.0-6.pdf, Section 3.8: Traffic categories";
3. Traffic Categorization
   The system utilizes predefined traffic categories (e.g., real-time, best-effort) as defined in standards such as 3GPP TS 23.503. Real-time traffic categories, for example, are automatically mapped to L4S due to their stringent low-latency requirements. As described in:" 3GPP TS 23.503 V19.1.0 (2024-09), Table 6.6.2.1-2: UE Route Selection Policy Rule" or "https://www.gsma.com/newsroom/wp-content/uploads/NG.141-v1.0-6.pdf, Section 3.8: Traffic categories;
4. Service Classification
   Traffic can also be classified based on its application or service type. For example, gaming, video-on-demand (VoD), or conferencing applications can be recognized and associated with L4S expectations, as outlined in standards like 3GPP URSP rules. This ensures service-specific QoS is aligned with L4S handling. As described in "3GPP TS 23.503 V19.1.0 (2024-09), Table 6.6.2.1-2: UE Route Selection Policy Rule";
5. Requests via Network APIs
   Certain services may explicitly request L4S-based QoS using network APIs. For example, an application could use APIs as defined in Camara or 3GPP standards to request network slices with low latency and low loss requirements. Such requests allow the multipath system to preemptively configure paths to support L4S. As described in "3GPP TS 23.503 V19.1.0 (2024-09), Section 5.20: External Exposure of Network Capability";

Examples of L4S Detection
- Example 1: Gaming Application
   A multiplayer gaming session generates packets marked with ECT(1) in the ECN field, indicating L4S support. The multipath system detects these markings and prioritizes this traffic for low-latency scheduling across the paths with minimal queuing delays.
- Example 2: Video Conferencing
   Packets from a video conferencing application exhibit traffic patterns with consistent small packet sizes and high sensitivity to latency. The system recognizes this behavior through DPI or service classification and determines that the traffic requires L4S handling.
- Example 3: API QoS Request
   A network API request from an augmented reality (AR) application explicitly specifies the need for ultra-low latency and low loss. Based on this request, the multipath system ensures that ECT(1) marking is applied and prioritizes the traffic accordingly.

This approach enables the multipath system to recognize and accommodate L4S traffic effectively. By coupling L4S detection with multipath transmission, the system ensures that latency-sensitive applications receive the necessary QoS, thereby maintaining end-to-end L4S properties even in complex network environments. The ability to detect L4S traffic across different methods - ECN marking, QoS analysis, traffic categorization, and service-based requests - provides flexibility and robustness, ensuring compatibility with diverse applications and standards.

If the usage or requirement of L4S is detected this information can be used in a second step to optimize the multipath system 100.

Details of the following embodiments can be found under the following reference that are thereby fully incorporated into the disclosure of the invention: https://datatrackerjetf.org/doc/html/rfc9330#name-components-of-an-l4s-dualq; https://datatracker.ietf.org/doc/html/rfc9330#section-4.2-1.

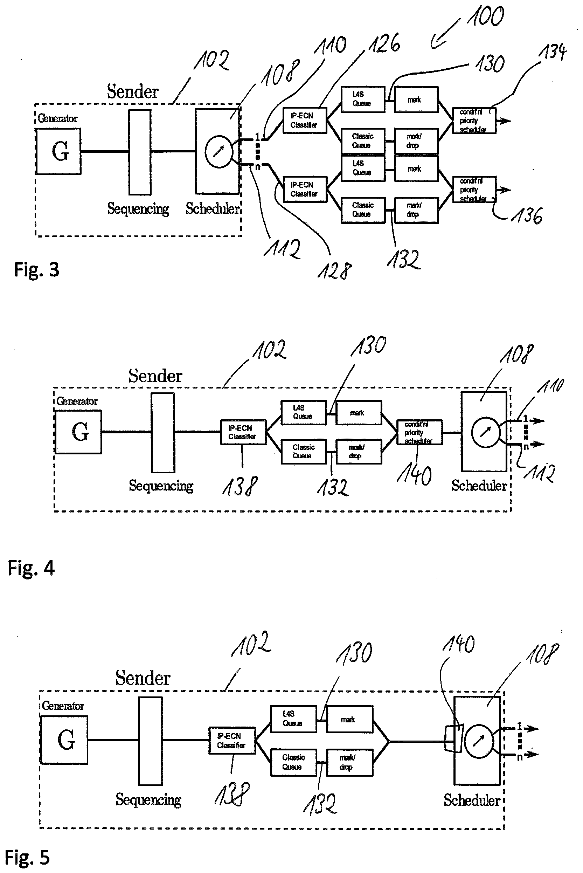

Fig. 3 illustrates a multipath communication system 100 implementing a Dual Queue Coupled AQM discipline where the L4S discipline is applied after the multipath scheduler 108. In this embodiment, the multipath scheduler 108 distributes traffic across available paths, such as first data path 110 and second data path 112, based on criteria such as latency or bandwidth. After the traffic exits the scheduler 108, each data path is associated with its own classifying entity 126, 128 and L4S priority scheduler entity 134, 136. The classifying entity 126 distinguishes between L4S and non-L4S traffic by examining packet properties, such as ECN signaling. L4S traffic is directed into an L4S-queue 130, while non-L4S traffic is directed into a non-L4S-queue 132. The L4S priority scheduler entity 134, 136 applies a traffic scheduling logic that prioritizes L4S traffic over non-L4S traffic based on a criteria, which determines the data amount of each traffic type passed through the L4S scheduler. This distributed design ensures per-path prioritization, allowing each data path to handle its L4S traffic independently with minimal latency. The system is particularly beneficial for high traffic volumes or diverse path characteristics, as it allows for tailored traffic handling per path. Additionally, the separation of L4S and non-L4S traffic minimizes interference, ensuring that L4S benefits are preserved for latency-sensitive applications such as real-time gaming and video conferencing.

Fig. 4 depicts a second embodiment of the multipath communication system 100, where the Dual Queue Coupled AQM discipline is applied before the multipath scheduler 108. In this configuration, a single classifying entity 138 processes all incoming traffic, distinguishing between L4S and non-L4S traffic. The L4S traffic is directed to an L4S-queue 130, while non-L4S traffic is directed to a non-L4S-queue 132. A single priority scheduler entity 134 then applies traffic scheduling logic to prioritize L4S traffic over non-L4S traffic based on a criteria that determines the data amount forwarded to the multipath scheduler 108. The multipath scheduler 108 subsequently distributes the prioritized traffic across first data path 110 and second data path 112. By using a single classifying entity 138 and a single priority scheduler entity 140, this embodiment centralizes classification and scheduling processes, simplifying the overall system design. It reduces the need for per-path entities, streamlining traffic management and lowering implementation complexity. By applying L4S prioritization upstream in the transmission chain, this embodiment ensures latency-sensitive L4S traffic receives preferential treatment before being scheduled onto the network paths. This setup is particularly advantageous for scenarios where the multipath scheduler 108 handles large traffic volumes, as it reduces the scheduler's operational burden and ensures efficient traffic prioritization early in the process.

Fig. 5 shows a third embodiment where the multipath scheduler 108 integrates the single L4S priority scheduler entity 140. In this configuration, a single classifying entity 138 located outside the multipath scheduler 108 distinguishes between L4S and non-L4S traffic, directing L4S traffic into an L4S-queue 130 and non-L4S traffic into a non-L4S-queue 132. Once classified, the traffic is forwarded to the multipath scheduler 108, which incorporates the single priority L4S scheduler entity 140. The integrated L4S priority scheduler entity 140 applies traffic scheduling logic within the multipath scheduler itself, prioritizing L4S traffic over non-L4S traffic based on a criteria that determines the data amount of each traffic type forwarded to the available paths. This integration reduces the complexity of maintaining separate L4S scheduling systems and ensures tight coordination between traffic classification and L4S scheduling. The consolidated design allows real-time adaptability, dynamically allocating bandwidth to L4S and non-L4S traffic based on network conditions. This embodiment is particularly suited for highly dynamic network environments requiring optimized resource allocation and latency reduction. It minimizes processing delays and maximizes performance, making it ideal for applications that require both high throughput and low latency, such as augmented reality and live streaming.

The sender entity 102 can be configured to forward or configure the L4S information. This enables that the receiving entity 116 can use this information with respect to their mutual communication.

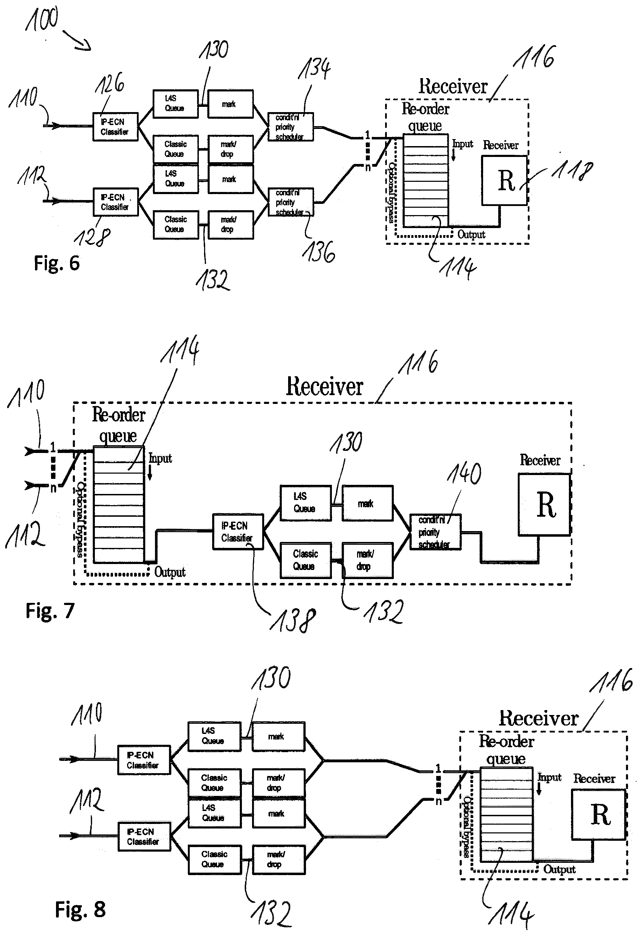

Fig. 6 illustrates a multipath communication system 100 where a Dual Queue Coupled AQM discipline is applied before the re-ordering queue 114, with per-path classification and prioritization. Each data path, such as first data path 110 and second data path 112, has its own classifying entity 126, 128, which can be implemented as an IP-ECN classifier. In principle, the re-ordering queue 114 of Fig. 6 is optional. The classifying entity distinguishes between L4S and non-L4S traffic, directing L4S traffic into an L4S-queue 130 and non-L4S traffic into a non-L4S-queue 132. A conditional priority scheduler entity 134, 136 is assigned to each data path to apply traffic scheduling logic that prioritizes L4S traffic over non-L4S traffic based on predefined criteria, such as latency or data volume. After prioritization, the traffic is forwarded to the re-ordering queue 114 in the receiver entity 116, which aligns packets from multiple paths. This embodiment ensures minimal delays for L4S traffic by prioritizing it upstream before reordering, while maintaining path-specific prioritization, making it suitable for latency-sensitive applications like online gaming or real-time video streaming.

Fig. 7 presents a different implementation, where the Dual Queue Coupled AQM discipline is applied after the re-ordering queue 114. In this configuration, the re-ordering queue 114 first aligns packets from first data path 110 and second data path 112 into their original sequence. Post-reordering, a single classifying entity 138, which can be implemented as an IP-ECN classifier, identifies and marks L4S and non-L4S traffic and separates them into an L4S-queue 130 and a non-L4S-queue 132, respectively. The traffic is then processed by a L4S priority scheduler entity 140, which prioritizes L4S traffic based on specific criteria before forwarding it to the receiver entity 116. This design simplifies reordering by ensuring that the re-ordering queue 114 operates independently of L4S-awareness. While this configuration introduces a slight delay in prioritization, it reduces complexity during reordering and provides flexibility for systems that process mixed traffic streams.

Fig. 8 depicts a configuration similar to Fig. 6, but with enhanced integration of the re-ordering queue 114 into the L4S discipline. Each data path has its own classifying entity 126, 128, which can be implemented as an IP-ECN classifier that separates L4S and non-L4S traffic into an L4S-queue 130 and a non-L4S-queue 132. However, instead of processing the traffic directly, the output from these queues is forwarded to the integrated re-ordering queue 114, which handles both reordering and prioritization. This integrated design minimizes processing delays by tightly coupling prioritization with reordering. The separation of L4S and non-L4S traffic within the re-ordering queue ensures that latency-sensitive L4S traffic maintains its low-latency properties throughout the transmission process. This setup is ideal for high-performance systems where end-to-end latency must be minimized.

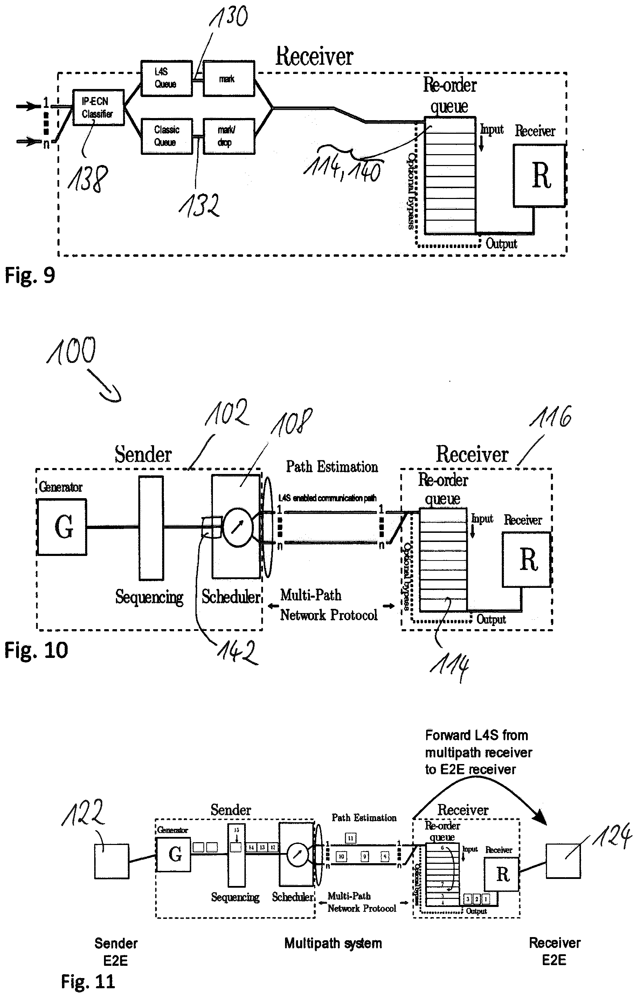

Fig. 9 shows a fourth embodiment, where the L4S discipline is fully integrated into the receiving entity 116. A single classifying entity 138, which can be implemented as an IP-ECN classifier, processes all incoming traffic from the different paths, separating L4S traffic into an L4S-queue 130 and non-L4S traffic into a non-L4S-queue 132. These queues feed directly into the integrated re-ordering queue 114, which dynamically allocates resources between L4S and non-L4S traffic based on real-time conditions. The integrated conditional priority scheduler 140 further optimizes traffic prioritization, ensuring that L4S traffic is forwarded with minimal delay to the receiver entity 116. This embodiment maximizes efficiency by combining classification, prioritization, and reordering into a unified system. It is particularly advantageous for dynamic environments where traffic priorities and resource requirements fluctuate, ensuring robust low-latency performance for L4S traffic.

Fig. 10 illustrates a multipath communication system 100 where L4S communication is enabled on one or more paths between the sender entity 102 and the receiver entity 116. The system incorporates a path manager 142 within the sender entity 102, which is responsible for establishing and maintaining the communication paths in the multipath network. The path manager 142 can activate L4S on individual paths by injecting the demand for L4S into the multipath system, enabling fine-grained control over L4S usage. In the depicted configuration, the first data path 110 between the sender and receiver is shown as L4S-enabled. This is achieved by applying appropriate L4S marking, such as setting the Explicit Congestion Notification (ECN) field in the IP header to ECT(1). The L4S-enabled path facilitates low-latency and low-loss communication, ensuring that L4S traffic receives preferential treatment across the network. Any L4S-capable entity located between the scheduler 108 in the sender and the re-ordering queue 114 in the receiver can apply the L4S discipline. This flexibility allows the L4S benefits to extend across multiple points in the communication chain. Additionally, L4S information can be forwarded at the egress of the receiver entity 116, ensuring continuity of the L4S treatment beyond the multipath system, as discussed in subsequent sections. The primary advantage of this configuration lies in its ability to dynamically adapt to the requirements of L4S-demanding traffic. By leveraging the path manager 142, the system can establish dedicated L4S-enabled paths, ensuring that such traffic experiences minimal delays and congestion. This setup is particularly beneficial for applications that are sensitive to latency and loss, such as real-time video streaming, online gaming, and conferencing. Moreover, the ability to selectively activate L4S on specific paths allows for efficient resource utilization, making the system adaptable to varying network conditions and application demands.

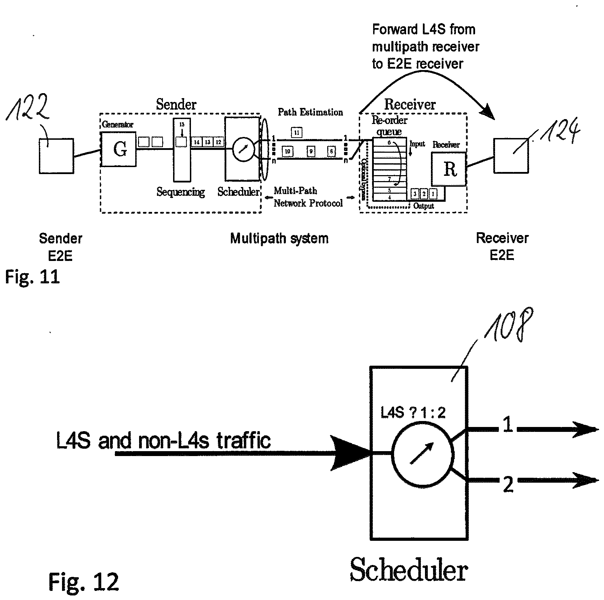

Fig. 11 illustrates a multipath communication system 100 where L4S-specific signaling is forwarded from the multipath receiver to an end-to-end (E2E) receiver 124, ensuring the continuity of L4S treatment beyond the multipath system. The communication originates at an E2E sender 122, which generates traffic that is processed by the sender entity 102 in the multipath system. The sender entity 102 sequences the generated traffic and distributes it across multiple paths, such as first data path 110 and second data path 112, using the multipath scheduler 108. At the receiving end, the multipath receiver, which includes the re-ordering queue 114 and the receiver entity 116, aligns packets arriving from multiple paths into their original sequence. The multipath receiver is also configured to detect L4S traffic by monitoring the ECN field in the IP header, which may be set to ECT(1) to indicate L4S marking. Upon detecting L4S usage on one or more multipath connections, the multipath receiver forwards this L4S-specific information to the E2E receiver 124. This is achieved by replicating the L4S marking (e.g., ECT(1)) on the connection between the multipath receiver and the E2E receiver. The integration of the E2E sender 122 and the E2E receiver 124 with the multipath system provides a seamless end-to-end communication flow that preserves L4S properties throughout. The E2E sender generates traffic with specific requirements, such as low latency and low loss, which are facilitated by L4S. The forwarding of L4S signaling at the multipath receiver ensures that these requirements are consistently met, even beyond the scope of the multipath system. The advantages of this configuration are significant. By forwarding L4S-specific signaling to the E2E receiver 124, the system ensures that latency-sensitive traffic retains its L4S benefits, such as low-latency and low-loss characteristics, across the entire communication chain. This setup is particularly beneficial for applications requiring strict QoS guarantees, such as online gaming, virtual reality, and real-time conferencing. Additionally, the inclusion of the E2E sender 122 and E2E receiver 124 allows the system to operate seamlessly in heterogeneous network environments, ensuring interoperability and consistent performance without requiring extensive modifications to existing infrastructure.

Fig. 12 illustrates a multipath scheduler 108 that is L4S-aware and applies scheduling logic to treat L4S and non-L4S traffic differently. In this embodiment, the scheduler 108 identifies incoming traffic and distinguishes packets with L4S marking from those without it. The scheduler uses specific criteria to decide the allocation of traffic to available communication paths, such as first data path 1 and second data path 2. For instance, traffic with L4S demand may be routed through a path that is configured to support L4S features, such as low latency and low loss, ensuring that the benefits of L4S are preserved. As depicted in Fig. 12, this logic is represented by the notation "L4S ? 1 : 2." Here, incoming L4S packets are assigned to path 1, which is optimized for L4S traffic, while incoming non-L4S packets are forwarded to path 2, which does not support L4S features. The scheduler 108 can also implement alternative scheduling strategies, such as assigning L4S traffic to the path with the lowest latency at a given time or distributing L4S traffic across multiple preferred paths for simultaneous use (aggregation). These strategies enhance the adaptability and performance of the system, ensuring that traffic is dynamically assigned based on real-time conditions and application requirements. The advantage of this configuration lies in its ability to optimize network resource utilization while ensuring quality of service for L4S traffic. By intelligently routing L4S packets to appropriate paths, the scheduler minimizes latency and packet loss for latency-sensitive applications like real-time gaming and video conferencing. At the same time, non-L4S traffic is efficiently handled on separate paths, preventing interference with L4S-optimized flows and ensuring balanced network operation. This setup provides flexibility and scalability, making it well-suited for dynamic and heterogeneous network environments.

Fig. 13 illustrates a re-ordering mechanism within a multipath communication system 100 that is L4S-aware, employing distinct re-ordering queues to manage L4S and non-L4S traffic differently. This configuration is located in the receiver entity 116 and includes a data traffic separator 144, an L4S queue 130 leading to a first re-ordering queue 146, and a non-L4S queue 132 leading to a second re-ordering queue 148. Incoming traffic is processed by the data traffic separator 144, which identifies L4S and non-L4S packets. L4S packets are directed to the L4S queue 130 and then to the first re-ordering queue 146, while non-L4S packets are directed to the non-L4S queue 132 and then to the second re-ordering queue 148. Each re-ordering queue is specifically configured to meet the requirements of its respective traffic type. For instance, the first re-ordering queue 146 for L4S traffic may have stricter latency constraints to preserve the low-latency characteristics of L4S, while the second re-ordering queue 148 for non-L4S traffic may prioritize throughput or reliability with less stringent timing constraints. This design ensures that the unique properties of L4S traffic are preserved throughout the re-ordering process. Additionally, the separation of L4S and non-L4S traffic minimizes interference between the two, enabling efficient and balanced traffic handling. This mechanism is particularly advantageous in scenarios where the multipath system is not the originator of the L4S requirement but still needs to uphold the L4S properties for certain traffic. The main advantage of this setup is its ability to maintain high performance for L4S traffic in multipath systems. By isolating L4S traffic in a dedicated re-ordering queue with optimized constraints, the system ensures minimal delay and consistent delivery for latency-sensitive applications such as real-time communication, online gaming, or augmented reality. Furthermore, the second re-ordering queue for non-L4S traffic allows the system to handle a diverse range of traffic types without compromising the performance of L4S flows. This flexibility makes the system well-suited for heterogeneous network environments with mixed traffic demands.

### References Cited

RFC 9330: "Components of an L4S DualQ Coupled AQM"
RFC 9331: "The L4S Architecture"
3GPP TS 23.503 V19.1.0: "Technical Specifications for QoS in Network Systems"

### Reference List

- 100: multipath communication system
- 102: sender entity
- 104: data generator unit, e.g. application
- 106: sequencing unit
- 108: multipath scheduler
- 110: first data path
- 112: second data path
- 114: re-ordering queue
- 116: receiving entity
- 118: receiving unit, e.g. application
- 120: data packets
- 122: E2E sender
- 124: E2E receiver
- 126: first classifying entity
- 128: second classifying entity
- 130: L4S-queue
- 132: non-L4S-queue
- 134: first priority scheduler entity
- 136: second priority scheduler entity
- 138: single classifying entity
- 140: single priority scheduler entity
- 142: path manager
- 144: data traffic separator
- 146: first re-ordering queue, in particular configured for L4S traffic
- 148: second re-ordering queue, in particular configured for L4S traffic

## Claims

1. A method for managing data traffic in a multipath communication system (100), comprising:
• receiving traffic, by a classifying entity (126, 128, 138), having Low Latency, Low Loss, and Scalable Throughput, L4S, properties by:
∘ monitoring Explicit Congestion Notification, ECN, signaling in the traffic stream, and/or
∘ analyzing traffic patterns, service types, and/or quality of service, QoS, requirements;
• classifying the detected L4S traffic and non-L4S traffic into separate queues (130, 132) by means of the classifying entity (126, 128, 138), in particular into a L4S-queue (130) and a non-L4S-queue (132);
• applying a traffic scheduling logic, by a L4S priority scheduler entity (134, 136, 140), that prioritizes L4S traffic over non-L4S traffic according to a criteria, wherein the criteria determines which data amount of L4S traffic and/or non-L4S traffic is being passed through the L4S priority scheduler entity (134, 136, 140);
• wherein the classifying entity, and the L4S priority scheduler entity are each associated with a multipath scheduler (108) of a sender entity (102), in particular associated with a scheduler buffer of the sender entity.

2. The method according to claim 1, wherein:
• a first classifying entity (126), and a first L4S priority scheduler entity (134) are associated with a first data path (110) and located in the direction of data traffic transmission behind the multipath scheduler (108); and
• a second classifying entity (128), and a second L4S priority scheduler entity (136) are associated with a second data path (112) and located in the direction of data traffic transmission behind the multipath scheduler (108);
• wherein the first data path and the second data path are part of a multipath communication system (100).

3. The method according to claim 1, wherein:
• a single classifying entity (138), and a single L4S priority scheduler entity are associated with a single data path and located in the direction of data traffic transmission before the multipath scheduler.

4. The method according to claim 3, wherein the single L4S priority scheduler (140) is integrated into the multipath scheduler (108).

5. The method according to any of the claims 1 to 4, further comprising dynamically adjusting the scheduling logic based on detected network congestion to optimize throughput and latency for L4S traffic.

6. The method according to any of the claims 1 - 5, wherein the classifying entity is configured to monitor the ECN field in the IP header of incoming traffic, wherein the ECN field is set to indicate L4S properties using ECT(1) marking.

7. The method according to claim 1, further comprising analyzing traffic patterns to identify service types associated with L4S requirements, wherein the service types include gaming, video conferencing, or other real-time communication services.

8. A sender entity (102) for managing data traffic in a multipath communication system, comprising:
a classifying entity configured to detect traffic having Low Latency, Low Loss, and Scalable Throughput, L4S, properties by: monitoring Explicit Congestion Notification, ECN, signaling in the traffic stream, and/or analyzing traffic patterns, service types, and/or quality of service, QoS, requirements;
the classifying entity configured to classify the detected L4S traffic and non-L4S traffic into separate queues, in particular into a L4S-queue and a non-L4S-queue;
a L4S priority scheduler entity configured to apply a traffic scheduling logic that prioritizes L4S traffic over non-L4S traffic according to a criteria, wherein the criteria determines which data amount of L4S traffic and/or non-L4S traffic is being passed through the L4S priority scheduler entity;
wherein the classifying entity, and the L4S priority scheduler entity are each associated with a multipath scheduler of the sender entity, in particular associated with a scheduler buffer of the sender entity.

9. A receiving entity (116) for managing data traffic in a multipath communication system, comprising:
• a classifying entity configured to detect traffic having L4S properties by:
∘ monitoring ECN signaling in the traffic stream, and/or
∘ analyzing traffic patterns, service types, and/or quality of service (QoS) requirements;
• the classifying entity configured to separate the detected L4S and non-L4S traffic received via at least two different data paths into a L4S-queue and a non-L4S-queue;
• a L4S priority scheduler entity configured to apply a traffic scheduling logic that prioritizes L4S traffic over non-L4S traffic according to a criteria, wherein the criteria determines which data amount of L4S traffic and/or non-L4S traffic is being passed to a receiving unit (118), in particular, a re-ordering queue (114) or to an application of the receiving entity;
• wherein the classifying entity, and the L4S priority scheduler entity are located before the receiving unit in the direction of data transmission or wherein the classifying entity, and the L4S priority scheduler entity are located behind the receiving unit in the direction of data transmission.

10. The receiving entity according to claim 9, wherein the re-ordering buffers of the receiving entity are configured to implement distinct re-ordering objectives, wherein the first buffer for L4S traffic minimizes latency, and the second buffer for non-L4S traffic maximizes throughput.

11. A multipath system (100) for managing data traffic, comprising:
• a path manager of a sender entity configured to receive a request for L4S features for a first data path and/or a second data path, wherein the path manager establishes and maintains the first data path and the second data path between multipath endpoints;
• realizing L4S traffic on one or more of the data paths of the multipath system by creating L4S marking on the respective data path by the path manager, in particular L4S features are applied by any L4S-capable entity along the path between a multipath scheduler and a receiver, in particular between an end-to-end, E2E, sender and an E2E receiver;
• the path manager being further configured to control the usage of L4S on individual paths of the multipath system.

12. The multipath system according to claim 11, wherein the path manager is further configured to inject L4S-specific signaling into the data path, wherein the signaling ensures that L4S properties are preserved at the receiver egress.

13. A computer program product for managing data traffic in a multipath communication system, comprising instructions which, when executed by a processor, cause the processor to:
• apply a scheduling logic within a multipath scheduler that treats L4S-marked traffic and non-L4S-marked traffic differently, wherein:
∘ traffic with L4S demand is scheduled into a first data path with L4S marking, while other traffic is scheduled into a second data path without L4S features;
• forward L4S-marked traffic to the first data path and non-L4S-marked traffic to the second data path based on the scheduling logic.

14. The computer program product according to claim 13, wherein the instructions further cause the processor to aggregate multiple data paths for simultaneous use to enhance bandwidth, while prioritizing L4S-marked traffic.

15. A re-ordering queue setup for managing data traffic in a multipath communication system, comprising:
• a first re-ordering queue configured for L4S traffic;
• a second re-ordering queue configured for non-L4S traffic, wherein the first re-ordering queue and the second re-ordering queue are configured differently in terms of re-ordering objectives and/or the maximum time packets remain in the respective queues;
• a data traffic separator configured to separate L4S traffic into the first re-ordering queue and non-L4S traffic into the second re-ordering queue.

## Amended claims

### Amended claims in accordance with Rule 137(2) EPC.

1. A method for managing data traffic in a multipath communication system (100), comprising:
• receiving traffic, by a classifying entity (126, 128, 138), having Low Latency, Low Loss, and Scalable Throughput, L4S, properties by:
∘ monitoring Explicit Congestion Notification, ECN, signaling in the traffic stream, and/or
∘ analyzing traffic patterns, service types, and/or quality of service, QoS, requirements;
• classifying the detected L4S traffic and non-L4S traffic into separate queues (130, 132) by means of the classifying entity (126, 128, 138), in particular into a L4S-queue (130) and a non-L4S-queue (132);
• applying a traffic scheduling logic, by a L4S priority scheduler entity (134, 136, 140), that prioritizes L4S traffic over non-L4S traffic according to criteria, wherein the criteria determines which data amount of L4S traffic and/or non-L4S traffic is being passed through the L4S priority scheduler entity (134, 136, 140);
• wherein the classifying entity, and the L4S priority scheduler entity are each associated with a multipath scheduler (108) of a sender entity (102), in particular associated with a scheduler buffer of the sender entity and
• wherein the multipath scheduler schedules transmission of prioritized L4S traffic based on the output of the L4S priority scheduler entity.

2. The method according to claim 1, wherein:
• a first classifying entity (126), and a first L4S priority scheduler entity (134) are associated with a first data path (110) and located in the direction of data traffic transmission behind the multipath scheduler (108); and
• a second classifying entity (128), and a second L4S priority scheduler entity (136) are associated with a second data path (112) and located in the direction of data traffic transmission behind the multipath scheduler (108);
• wherein the first data path and the second data path are part of a multipath communication system (100).

3. The method according to claim 1, wherein:
• a single classifying entity (138), and a single L4S priority scheduler entity are associated with a single data path and located in the direction of data traffic transmission before the multipath scheduler.

4. The method according to claim 3, wherein the single L4S priority scheduler (140) is integrated into the multipath scheduler (108).

5. The method according to any of the claims 1 to 4, further comprising dynamically adjusting the scheduling logic based on detected network congestion to optimize throughput and latency for L4S traffic.

6. The method according to any of the claims 1 - 5, wherein the classifying entity is configured to monitor the ECN field in the IP header of incoming traffic, wherein the ECN field is set to indicate L4S properties using ECT(1) marking.

7. The method according to claim 1, further comprising analyzing traffic patterns to identify service types associated with L4S requirements, wherein the service types include gaming, video conferencing, or other real-time communication services.

8. A sender entity (102) for managing data traffic in a multipath communication system, comprising:
a classifying entity configured to detect traffic having Low Latency, Low Loss, and Scalable Throughput, L4S, properties by: monitoring Explicit Congestion Notification, ECN, signaling in the traffic stream, and/or analyzing traffic patterns, service types, and/or quality of service, QoS, requirements;
the classifying entity configured to classify the detected L4S traffic and non-L4S traffic into separate queues, in particular into a L4S-queue and a non-L4S-queue;
a L4S priority scheduler entity configured to apply a traffic scheduling logic that prioritizes L4S traffic over non-L4S traffic according to a criteria, wherein the criteria determines which data amount of L4S traffic and/or non-L4S traffic is being passed through the L4S priority scheduler entity;
wherein the classifying entity, and the L4S priority scheduler entity are each associated with a multipath scheduler of the sender entity, in particular associated with a scheduler buffer of the sender entity, and
wherein the multipath scheduler is configured to schedule transmission of prioritized L4S traffic based on the output of the L4S priority scheduler entity.

9. A receiving entity (116) for managing data traffic in a multipath communication system, comprising:
• a classifying entity configured to detect traffic having L4S properties by:
∘ monitoring ECN signaling in the traffic stream, and/or
∘ analyzing traffic patterns, service types, and/or quality of service (QoS) requirements;
• the classifying entity configured to separate the detected L4S and non-L4S traffic received via at least two different data paths into a L4S-queue and a non-L4S-queue;
• a L4S priority scheduler entity configured to apply a traffic scheduling logic that prioritizes L4S traffic over non-L4S traffic according to a criteria, wherein the criteria determines which data amount of L4S traffic and/or non-L4S traffic is being passed to a receiving unit (118), in particular, a re-ordering queue (114) or to an application of the receiving entity;
• wherein the classifying entity, and the L4S priority scheduler entity are located before the receiving unit in the direction of data transmission or wherein the classifying entity, and the L4S priority scheduler entity are located behind the receiving unit in the direction of data transmission.

10. The receiving entity according to claim 9, wherein the re-ordering buffers of the receiving entity are configured to implement distinct re-ordering objectives, wherein the first buffer for L4S traffic minimizes latency, and the second buffer for non-L4S traffic maximizes throughput.

11. A multipath system (100) comprising the sender entity (102) according to claim 8 and the receiving entity (116) according to claim 9, the system being configured to perform the method according to any one of claims 1 to 7 for managing data traffic, further comprising:
• a path manager of a sender entity configured to receive a request for L4S features for a first data path and/or a second data path, wherein the path manager establishes and maintains the first data path and the second data path between multipath endpoints;
• realizing L4S traffic on one or more of the data paths of the multipath system by creating L4S marking on the respective data path by the path manager, in particular L4S features are applied by any L4S-capable entity along the path between a multipath scheduler and a receiver, in particular between an end-to-end, E2E, sender and an E2E receiver;
• the path manager being further configured to control the usage of L4S on individual paths of the multipath system.

12. The multipath system according to claim 11, wherein the path manager is further configured to inject L4S-specific signaling into the data path, wherein the signaling ensures that L4S properties are preserved at the receiver egress.

13. A computer program product for managing data traffic in a multipath communication system, comprising instructions which, when executed by a processor of the sender entity according to claim 8, cause the processor to perform the method according to any of claims 1 to 7,
• apply a scheduling logic within a multipath scheduler that treats L4S-marked traffic and non-L4S-marked traffic differently, wherein:
∘ traffic with L4S demand is scheduled into a first data path with L4S marking, while other traffic is scheduled into a second data path without L4S features;
• forward L4S-marked traffic to the first data path and non-L4S-marked traffic to the second data path based on the scheduling logic.

14. The computer program product according to claim 13, wherein the instructions further cause the processor to aggregate multiple data paths for simultaneous use to enhance bandwidth, while prioritizing L4S-marked traffic.

15. A re-ordering queue setup according to the receiving entity (116) as defined in claim 9, configured for managing data traffic in a multipath communication system (100) as defined in any of claims 1 to 14, comprising:
• a first re-ordering queue configured for L4S traffic;
• a second re-ordering queue configured for non-L4S traffic, wherein the first re-ordering queue and the second re-ordering queue are configured differently in terms of re-ordering objectives and/or the maximum time packets remain in the respective queues;
• a data traffic separator configured to separate L4S traffic into the first re-ordering queue and non-L4S traffic into the second re-ordering queue.
